Europäisches Patentamt

European Patent Office

Office européen des brevets

(11) Veröffentlichungsnummer: **0 289 703 B1**

(12) **EUROPÄISCHE PATENTSCHRIFT**

(45) Veröffentlichungstag der Patentschrift: **12.05.93**

(51) Int. Cl.⁵: **H02G 11/00, B25J 19/00**

(21) Anmeldenummer: **88101553.1**

(22) Anmeldetag: **03.02.88**

(54) **Versorgungsleitungsanordnung für einen Roboter.**

(30) Priorität: **06.05.87 DE 3715118**

(43) Veröffentlichungstag der Anmeldung:
**09.11.88 Patentblatt 88/45**

(45) Bekanntmachung des Hinweises auf die
Patenterteilung:
**12.05.93 Patentblatt 93/19**

(84) Benannte Vertragsstaaten:
**AT BE DE ES FR GB IT NL SE**

(56) Entgegenhaltungen:
**EP−A− 0 217 336**
**DE−A− 3 410 637**
**DE−C− 634 552**
**FR−A− 972 006**
**FR−A− 2 249 458**

**PATENT ABSTRACTS OF JAPAN vol. 8, no.**
**280 (M−347)(1717) 21 Dezember 1984, & JP−**
**A−59 149276**

(73) Patentinhaber: **W.L. Gore & Associates GmbH**
**Hermann−Oberth−Strasse 22**
**W−8011 Putzbrunn(DE)**

(72) Erfinder: **Haiduk, Herbert**
**Am Einsiedel 24a**
**W−8835 Pleinfeld(DE)**

(74) Vertreter: **Klunker . Schmitt−Nilson . Hirsch**
**Winzererstrasse 106**
**W−8000 München 40 (DE)**

## Beschreibung

Die Erfindung betrifft eine Versorgungsleitungsanordnung gemäß Oberbegriff des Anspruchs 1.

Bei modernen Produktionsanlagen werden zunehmend Automationssysteme im Form von Robotern eingesetzt, beispielsweise Schweißroboter bei der Herstellung von Kraftfahrzeugen.

Derartige Roboter führen im allgemeinen sowohl translatorische als auch rotatorische Bewegungen aus. Die rotatorischen Bewegungen geschehen üblicherweise durch Drehen der Roboterbasis um eine vertikale Drehachse. Dabei soll der Drehwinkel so groß wie möglich sein, wobei Drehwinkel von mindestens 360˚ oder mehr besonders vorteilhaft sind. Zur Erzielung eines hohen Arbeitstaktes werden die einzelnen Drehbewegungen unter hohen Drehbeschleunigungen und Drehgeschwindigkeiten durchgeführt.

Solche Roboter bedürfen vielfältiger Versorgung elektrischer und/oder pneumatischer und/oder hydraulischer Art. Somit ist eine Vielzahl elektrischer Leitungen und/oder fluider Leitungen erforderlich, um den hin und herrotierenden Roboter mit ortsfesten Versorgungsquellen zu verbinden.

Ein Problem besteht darin, daß einerseits möglichst wenig zusätzlicher Raum für die Versorgungsleitungen verbraucht werden soll und daß die Versorgungsleitungen andererseits bei den raschen Hin und Herbewegungen des Roboters nicht zu starken mechanischen Belastungen und Abriebbelastungen ausgesetzt werden sollen.

Bekannt ist ein Kabelgalgen, von dessen horizontalem Galgenarm Versorgungsleitungen zu den verschiedenen versorgungsbedürftigen Stellen des Roboters herabhängen. Dabei muß der horizontale Galgenarm in einer solchen Höhe angeordnet sein, daß er nicht nur den Roboter auch in dessen vollständig aufgerichteter Höhe überragt, sondern daß auch in weit aufgerichtetem Zustand des Roboters die vom Galgenarm zu den oberen Bereichen des Roboters herabhängenden Kabelschlaufen nicht zu tief herabhängen und bei der Drehbewegung des Roboters stören oder gar beschädigt werden. Somit erfordert eine solche Galgenlösung viel höher, nämlich etwa 2m höhere Produktionshallen, als sie von der Roboterhöhe benötigt würden. Dies erfordert verteuerte Werkhallenkonstruktionen oder hat zur Folge, daß eine in der Automobilindustrie häufig anzutreffende zweite Produktionsebene in bestehenden Produktionshallen nicht möglich ist. Sie beschränken den Drehbereich der Roboter auf etwa 330˚.

Bekannt ist auch ein sogenannter Kabelschlepp. Dabei wird das zwischen ortsfester Versorungseinrichtung und hin und herrotierendem Roboter befindliche Versorgungskabel in einer bogenförmigen Schlaufe neben die Roboterbasis gelegt. Um zu starke mechanische Belastung des Kabels zu verhindern, insbesondere starken Abrieb durch Aneinanderschlagen unterschiedlicher Kabelteile und eine dynamische Biegebelastung am Kabelumkehrende der Schlaufe, muß der Kabelschlaufenaußenteil in einem beträchtlichen Abstand vom Kabelschlaufeninnenteil gehalten werden. Der Platzbedarf von Roboterbasis und Kabelschlepp zusammengenommen ist daher recht hoch. Pro Roboter sind dabei etwa 2 bis 3 m² zusätzlicher Bodenfläche erforderlich und die Roboter können nicht so dicht nebeneinander stehe, wie es der günstigste Arbeitsablauf oft wünschenswert macht. Außerdem erreicht man in der Praxis einen Drehwinkel von nicht mehr als 320˚.

Vom Platzbedarf her am günstigsten ist die sogenannte Versorgungsleitungsspirale. Dabei ist das die Versorgungsleitungen enthaltende Kabel spiralförmig um den Drehfuß des Roboters herum angeordnet. Das Innenende der Versorgungsleitungsspirale ist mit dem hin und herdrehbaren Drehfuß des Roboters verbunden, während das Außenende der Spirale an eine ortsfeste Versorgungseinrichtung angeschlossen ist. Beim Hin und Herdrehen des Roboterfußes kommt es zu einem entsprechenden uhrfederartigen Ein und Ausdrehen der Versorgungsleitungsspirale. Es lassen sich problemlos Drehwinkel von weit über 360˚ realisieren.

Diese bekannte Versorgungsleitungsspirale ist aber allenfalls für langsame Rotordrehungen zufriedenstellend. Bei den schnellen Drehbewegungen, die bei modernen Produktionsanlagen mit hohem Arbeitstakt benötigt werden, führen die dabei auftretenden hohen Beschleunigungs und Fliehkräfte zu Verwerfungen innerhalb der Vorsorgungsleitungsspirale, zu stark beanspruchenden Kabelbiegungen, und zum heftigen Aneinanderschlagen der Kabelteile benachbarter Spirallagen, was zu einem hohen Kabelverschleiß und Kabelbeschädigungen führt. Um dieses Problem abzumildern, muß man zwischen den benachbarten Lagen der Versorgungsleitungsspirale einen großen Abstand lassen, was zu einem großen Außendurchmesser der Versorgungsleitungsspirale führt und somit wieder zu einem großen Platzbedarf.

Aus der FRA 97 2006 ist es bekannt mehrere elektrische Leitungen dadurch in Spiralform zu bringen, daß sie an einer Seite einer Spiralfeder mittels Befestigungselementen festgehalten sind. Die Leitungen befinden sich außerhalb der neutralen Zone der Spiralfeder und sind daher unter Bildung von Durchhängestellen befestigt, um beim Ein und Ausdrehen der Spirale Längenänderungen auszugleichen. Um zu vermeiden, daß die Drehstellmotoren von der Spiralfeder zu stark belastet werden, kann zwischen der feststehenden Einrichtung und der verdrehbaren Einrichtung zusätzlich zu der die Leitungen haltenden Spiralfeder eine parallele Spiralfeder vorgesehen werden, deren Spiralwickelsinn und damit Federkraft der die Leitungen tragenden Spiralfeder entgegengerichtet ist. Dadurch, daß sich die Leitungen auf der Außenseite der Federspirale befinden, also außerhalb der neutralen Zone der Spirale, sind sie insbesondere bei raschem Ein- und Ausdrehen der Spirale starken mechanischen Belastungen ausgesetzt. Die Durchhängestellen zur Längenkompensation bei ein- und bei ausgedrehter Spirale verursachen eine ständige Biegebeanspruchung mit kleinem Radius der Leitungen und bei raschen Ein- und Ausdrehungen kann es an dieser Stelle zu stoßartigen Kabelverwerfungen kommen.

Aus Patent Abstract of Japan betreffend JP-A-59 149276 ist eine Kabelspirale bekannt, bei welcher eine Vielzahl von elektrischen oder optischen Leitungen sandwichartig zwischen zwei elastischen Gliedern eingeschlossen ist, wobei die elastischen Glieder eine Vorspannung in ausdrehender Richtung bewirken. Hier sind die uhrfederartigen Metallspiralen gemäß anderen bekannten Lösungen durch die elastischen Glieder ersetzt, wobei jedoch beibehalten worden ist, daß nur eine ausdrehende Kraft ausgeübt wird, um eine eingedrehte Spirale auch wieder auszudrehen. Insbesondere bei Kabelspiralen mit einer relativ schweren Leitungsanordnung müssen die elastischen Glieder eine starke ausdrehende Kraft ausüben können, um die eingedrehte Kabelspirale wieder sicher ausdrehen zu können. Diese starke ausdrehende Kraft muß bei jedem Eindrehen der Kabelspirale von dem das Eindrehen bewirkenden Antriebsmotor überwunden werden. Dieser Motor muß daher für relativ starke Drehleistungen ausgelegt sein.

Eine weitere Möglichkeit ist die Verwendung eines Schleifringes mit Schleifkontakten. Dieser kann am Drehfuß des Roboters angeordnet sein. Es ergibt sich daher ein sehr geringer horizontaler Platzbedarf. Da üblicherweise die Anzahl der Steuerleitungen und Versorgungsleitungen, die mit dem Roboter verbunden werden müssen, recht groß ist, muß ein solcher Schleifring eine große Anzahl von Schleifkontakten aufweisen. Besonders problematisch wird es, wenn nicht nur elektrische Verbindungen sondern auch Fluidübertragungen benötigt werden. Eine solche Schleifringlösung ist nicht nur mechanisch aufwendig und wegen extrem hohen Kostenaufwands unwirtschaftlich sondern unterliegt auch einem hohen Abrieb und hoher Verschmutzungsgefahr, so daß die Standdauer und Zuverlässigkeit nicht besonders hoch sind.

Der Erfindung liegt die Aufgabe zugrunde, eine Versorgungsleitungsanordnung der einleitend angegebenen Art verfügbar zu machen, die bei Aufrechterhaltung eines großen maximalen Drehwinkels und bei relativ kleinem Platzbedarf eine weitgehende Schonung der Versorgungsleitung bzw. Versorgungskabel ermöglicht.

Die Lösung dieser Aufgabe ist im Anspruch 1 angegeben und kann den Unteransprüchen gemäß vorteilhaft weitergebildet werden.

Mit der erfindungsgemäß vorgespannten Versorgungsleitungsspirale wird einerseits sichergestellt, daß die Versorgungsleitungsspirale nach jeder Drehbewegung wieder die dem unbeeinflußten Ruhezustand entsprechende ursprüngliche Spiralform einnimmt. Andererseits wird erreicht, daß die Versorgungsleitungsspirale in jeder Drehstellung eine saubere Spiralform beibehält. Undefinierte und ungute Biegebeanspruchungen, Verwerfungen und ein unkontrolliertes Aneinanderschlagen benachbarter Lagen der Versorgungsleitungsspirale können somit nicht auftreten. Und weil die Spiralform auch bei schnellen Drehbewegungen und den damit einhergehenden Beschleunigungs und Fliehkräften immer ihre saubere Spiralform beibehält, können die einzelnen Lagen der Versorgungsleitungsspirale relativ dicht nebeneinander angeordnet werden. Der Außendurchmesser der Spirale kann somit relativ klein bleiben.

Die erfindungsgemäße vorgespannte Spirale ist zwar auch dann, wenn nur eine einzige Versorgungsleitung benötigt wird, vorteilhaft und erfolgreich. Insbesondere bei der Versorgung von rotierbaren Robotern wird aber immer eine große Anzahl von Versorgungsleitungen erforderlich sein, die vorteilhafterweise zu einem oder mehreren Kabeln zusammengefaßt werden. Besonders bevorzugt wird bei der erfindungsgemäßen Versorgungsleitungsspirale die Verwendung von einem oder mehreren parallel zur Drehachse aufgestellten Flachbandkabeln. Bei einer Versorgungsleitungsspirale mit mehreren nebeneinanderliegenden Flachbandkabeln sollten die einzelnen Flachbandkabel in Kabellängsrichtung relativ zueinander beweglich gehalten werden, um den unterschiedlichen Krümmungsradien und damit Längsbewegungen der in der Spirale nebeneinanderliegenden Kabel Rechnung zu tragen.

Es besteht die Möglichkeit, den elastischen Innenstrang und den elastischen Außenstrang in einer Innennut oder einem Innentunnel auf der Innenseite des Kabels oder Kabelbündels bzw. in einer Außennut oder einem Außentunnel auf der Außenseite des Kabels oder Kabelbündels mit der erforderlichen Vorspannung unterzubringen.

Eine andere Möglichkeit ist die, sowohl den Innenstrang als auch den Außenstrang nur an vorbestimmten Befestigungsstellen mit dem Kabel oder Kabelbündel zu verbinden, wobei diese Befestigungsstellen in vorbestimmten Abständen entlang des Kabels oder Kabelbündels der Versorgungsleitungsspirale verteilt sind. Diese Abstände können über die gesamte Spirallänge gleich oder verschieden sein. Im letzteren Fall nimmt der Abstand zwischen je zwei benachbarten Befestigungsstellen vorzugsweise mit zunehmendem Abstand von der Spiralmitte aus zu.

Die elastischen Stränge können an den Befestigungsstellen an dem Kabel oder Kabelbündel durch Befestigungselemente, beispielsweise Befestigungsklemmen, festgelegt sein. Sie können aber auch an den Befestigungsstellen in einen Kunststoffmantel des Kabels bzw. des innen- und des außenliegenden Kabels eines Kabelbündels eingeformt, insbesondere eingespritzt oder eingegossen, sein.

Für den Fall, daß die elastischen Stränge nur an den Befestigungsstellen mit dem Kabel befestigt sind, wird der elastische Außenstrang an der Außenseite des Kabels bzw. Kabelbündels anliegend angeordnet. Der elastische Innenstrang verbindet je zwei benachbarte Befestigungsstellen sehnenförmig. Dies führt zu dem zusätzlichen Vorteil, daß bei einem starken Eindrehen der Versorgungsleitungsspirale die Kabel der einzelnen Spirallagen mit ihrer Außenseite an die Innenstrangsehne der nach außen hin jeweils benachbarten Spirallage stoßen und dort federnd abgefangen werden, bevor sie an die benachbarte Kabellage anstoßen können.

Die Vorspannung durch den Innenstrang ist derart, daß sich die Versorgungsleitungsspirale einzudrehen versucht. Die Vorspannung durch den Außenstrang ist solchermaßen, daß sich die Versorgungsleitungsspirale auszudrehen versucht. Durch das Zusammenwirken der Vorspannungen durch Innenstrang und Außenstrang kommt es dazu, daß die Versorgungsleitungsspirale im unbeeinflußten Zustand, d.h., wenn man die sowohl vom Roboter als auch von der ortsfesten Versorgungseinheit entkoppeln würden, eine ganz bestimmte Spiralform mit ganz bestimmtem Eindrehungsgrad einnimmt. Diese Ruhestellungsspiralform ist durch die Kombination von Innenstrangvorspannung und Außenstrangvorspannung wählbar.

Die Wirkung ist ähnlich wie bei einem gespannten Bogen, mit dem man Pfeile abschießen kann. Die Vorspannung durch den Außenstrang entspricht dem Rückstelldrang des gespannten Bogens in seine ursprüngliche Form. Die Vorspannung durch den Innenstrang entspricht der Kraft, mit welcher die Sehne den Bogen in seiner gekrümmten Form hält. Geht man bei dem Bogen zum Abschießen von Pfeilen von einer elastischen Sehne aus, so stellt sich im unbeeinflußten Zustand des gespannten Bogens ein Gleichgewicht zwischen Rückstelldrang des Bogens und Zugkraft der gespannten Sehne ein. Nach einer Störung dieses

unbeeinflußten Zustands, entweder durch Rückbiegen des Bogens oder durch Ausübung eines Zuges auf die Sehne, wie es beim Spannen des Bogens mit aufgesetztem Pfeil der Fall ist, nimmt der gespannte Bogen wieder seine ursprüngliche Form ein, sobald die Störung beendet ist.

Gleichermaßen wirkt die Vorspannung der erfindungsgemäßen Versorgungsleitungsspirale. Wird sie aus ihrem unbeeinflußten Ruhezustand, in den sie durch die kombinierte Wirkung von Außenstrangvorspannung und Innenstrangvorspannung gebracht wird, infolge der Drehbewegung des Rotors stärker ein- oder stärker ausgedreht, hat sie immer das Bestreben, sich in ihre Ruhespiralform zurückzuformen. Dabei wird in allen Drehstellungen immer eine saubere Spiralform beibehalten.

Bezeichnet man die vom Innenstrang auf die Versorgungsleitungsspirale ausgeübte Vorspannkraft mit $P_i$, die vom Außenstrang auf die Versorgungsleitungsspirale ausgeübte Vorspannkraft mit $P_a$ und die zur Überwindung des Biegewiderstandes des Kabels aufzuwendende Kraft mit $P_k$, ergibt sich die Bedingung

$$P_a + P_k \leqq P_i,$$

um das Kabelbündel in eine Spiralform vorzuspannen.

Die vorgespannte Versorgungsleitungsspirale gemäß vorliegender Erfindung ist nicht nur für Drehbewegungen um eine vertikale Drehachse geeignet sondern auch für Drehbewegungen um eine anders gerichtete Drehachse, wenn das Kabel oder Kabelbündel nicht zu schwer ist.

Im Fall einer horizontal angeordneten Versorgungsleitungsspirale wird insbesondere bei relativ schwerem Kabel die Versorgungsleitungsspirale auf einer Gleitunterlage angeordnet und das Kabel oder Kabelbündel an seiner Unterseite mit einer Gleiteinrichtung versehen. Die Gleiteinrichtung kann in Form von Gleitfüßchen vorgesehen werden, die in bestimmten Abständen entlang des Kabels oder Kabelbündels angeordnet sind, vorzugsweise an den Strang-Befestigungsstellen. Bevorzugtermaßen sind die Gleitfüße am Unterteil von Haltejochen angeordnet, welche die Versorgungsleitungen an den Befestigungsstellen einfassen. Gleiteinrichtung und Gleitfläche sollten aus einem gut gleitfähigen Material bestehen. Bevorzugt wird z.B. Polytetrafluoräthylen (PTFE) für die Gleiteinrichtung und/oder die Gleitunterlage.

Die elastischen Stränge können durch elastische Schnüre, beispielsweise Gummischnüre, Polyurethanschnüre oder dergleichen gebildet werden. Es besteht aber auch die Möglichkeit, die Vorspannungen mittels Federelementen zu bewirken, beispielsweise durch eine Vielzahl von einzelnen Schraubenfedern, die zwischen je zwei benachbarte Befestigungsstellen gespannt sind.

Vorzugsweise beidseits der Versorgungsleitungen bzw. Kabel sind Schutzbänder angeordnet, deren Höhe der Höhe der Versorgungsleitungen bzw. Kabel in Drehachsenrichtung entspricht, die entlang der gesamten Spiralenlänge mit den Versorgungsleitungen bzw. Kabeln mitgeführt sind und die aus prallfestem Material bestehen, vorzugsweise elastischem Material. Bei der Einfassung der Versorgungsleitungen bzw. Kabel durch Haltejoche an den Befestigungsstellen sind die Schutzbänder von den Haltejochen mit eingefaßt und zusammen mit den Versorgungsleitungen bzw. Kabeln relativ zu den Haltejochen verschiebbar.

Es besteht auch die Möglichkeit, die Schutzbänder in Doppelfunktion selbst als elastische Innen- bzw. Außenstränge zu verwenden oder mit zu verwenden.

Bei Verwendung der erfindungsgemäßen Versorgungsleitungsanordnung für einen Roboter sind die wesentlichsten Vorteile wie folgt:

1. Je nach Verlegung des Kabelbündels kann der Roboter Schwenkbewegungen beliebig hohen Drehwinkels durchführen, was zu einer wesentlichen Verkürzung der Roboter-Taktzeiten führen kann, da weniger Volldrehungen des Roboters erforderlich sind.

2. Das Kabelbündel kann im Robotergehäuse selbst verlegt werden, so daß es gegen mechanische Beschädigung von außen voll geschützt ist.

3. Das Kabelbündel kann an zwei Stellen, nämlich dem rotierenden Kern und dem feststehenden Außengehäuse des Roboters fest angeschlossen werden, um eine zentrale Einspeisung zu ermöglichen.

4. Zusammen mit dem Kabelbündel können Wasser-, Luft-, Hydraulik- und/oder Gas-Schläuche integriert werden, was eine zusätzliche Raumersparnis bedeutet.

5. Durch die Anordnung des Kabel- und Schlauchbündels wird keinerlei Zug auf die Anschlußelemente ausgeübt, so das Kabel- und Schlauchbrüche durch Überbelastung unwahrscheinlich sind.

6. Eindringer Staub, Öle und sonstige Verunreinigungen können das so angeordnete Versorgungsleitungssystem weder verletzen noch zerstören.

7. Das gesamte Versorgungsleitungssystem ist wartungsfrei.

8. Durch die Verwendung von PTFE als Kabelisolierung kann das Kabelbündel radial zur Spiraldrehachse besonders flachgehalten werden, so daß in einem bestimmten verfügbaren Spiralraum eine besonders große Kabellänge und/oder eine besonders hohe Aderzahl uuntergebracht und ein entsprechend großer Drehwinkelbereich erreicht werden kann.

Um eine gute Gleitfähigkeit zwischen den einzelnen nebeneinander angeordneten Flachkabeln der Verorgungsleitungsspirale sicherzustellen, sind die einzelnen Versorgungsleitungen oder Kabel mit einer Umhüllung aus PTFE oder gerecktem PTFE versehen, das zu einer sehr guten Gleitfähigkeit führt. Zusätzlich oder alternativ kann man zwischen den einzelnen Versorgungsleitungen oder Kabeln Gleitbänder aus PTFE oder gerecktem PTFE anordnen.

Bei Robotern, die mit Hilfe der erfindungsgemäßen Versorgungsleitungsspirale versorgt werden können, kann es sich um Schweißroboter handeln. Diesen muß neben den Steuersignalen ein ziemlich hoher Schweißstrom, beispielsweise im Bereich von 25 A, zugeführt werden. Herkömmlicherweise werden die Schweißkabel in einem räumlichen Abstand von mindestens 2 m von den Steuersignalleitern des Roboters geführt, um Störeinstrahlungen in die Steuersignalleiter zu vermeiden, die durch das Schalten derart hoher Ströme, insbesondere beim Punktschweißen, erzeugt werden. Zusätzlich werden die Steuersignalleiter überlicherweise mit Abschirmungen zum Schutz vor solchen Störsignalen versehen.

Diese Probleme werden mit einem erfindungsgemäßen Schweißkabel gemäß einem oder mehreren der Ansprüche 33 bis 35 überwunden.

Anstelle eines dicken runden Leiters mit einem Leitungsquerschnitt von beispielsweise $3\ mm^2$ werden erfindungsgemäß beispielsweise drei Leiter mit je einem Leitungsquerschnitt von $1\ mm^2$ sich berührend nebeneinander angeordnet und dann gemeinsam mit einer Isolation umgeben, über der dann eine flexible elektrische Abschirmung, beispielsweise in Form eines geflochtenen Schirms, aufgebracht wird. Vorzugsweise werden mehrere solcher Leitungsbündel zusammen mit Steuersignalleitungen in einem gemeinsamen Bandkabel untergebracht.

Als Vorteile ergeben sich, daß das Schweißkabel leichter biegbar ist als der herkömmliche dicke Rundleiter, daß Steuersignalleiter nicht mehr oder nicht mehr so intensiv abgeschirmt zu werden brauchen und daß man das erfindungsgemäße Schweißkabel und Steuersignalleiter dicht nebeneinander, möglicherweise auch in einem gemeinsamen Kabelmantel, anordnen kann.

Ein derartiges Kabel entsprechend einem oder mehreren der Ansprüche 33 bis 35 ist nicht nur im Zusammenhang mit einer erfindungsgemäßen Versorgungsleitungsspirale brauchbare und vorteilhaft sondern auch unabhängig von einer solchen Versorgungsleitungsspirale. Derartige Schweißkabel stellen somit unabhängig von einer Verwendung in einer erfindungsgemäßen Versorgungsleitungsspirale einen selbständigen Erfindungsgegenstand dar.

Die Erfindung wird nun anhand einer Ausführungsform näher erläutert. In den zugehörigen Zeichnungen zeigen:

Fig. 1 eine schematische Darstellung einer erfindungsgemäßen Versorgungsleitungsspirale in Draufsicht; und

Fig. 2 eine Vertikalschnittansicht durch die Versorgungsleitungsspirale an einer der Befestigungsstellen.

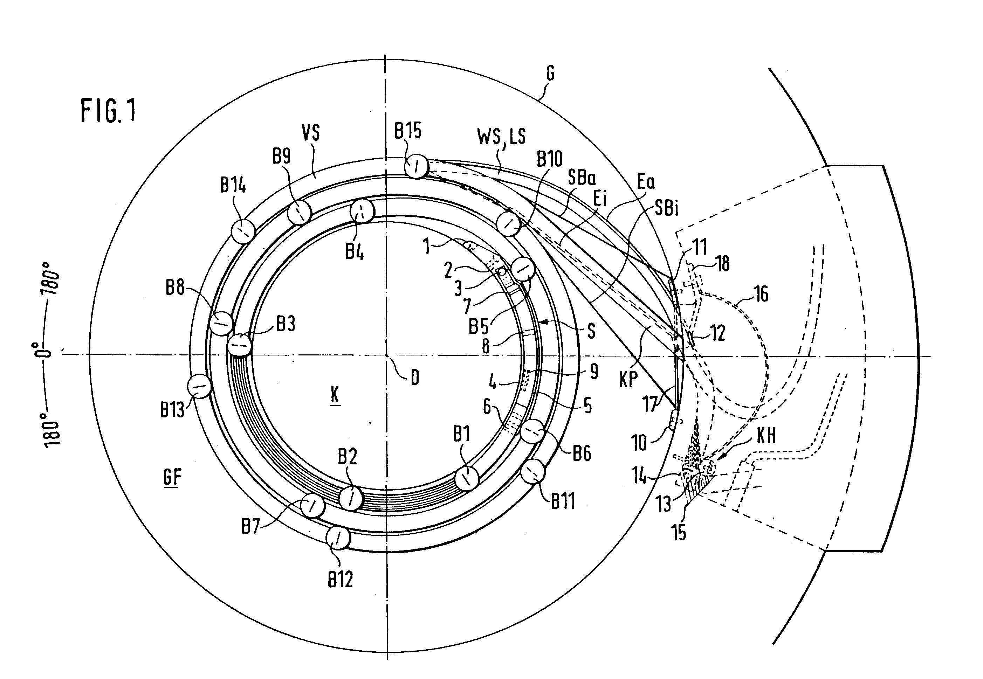

Fig. 1 zeigt maßstabgetreu eine Ausführungsform einer erfindungsgemäßen Versorgungsleitungsspirale VS für die Versorgung eines Roboters, von dem nur ein feststehendes Gehäuse G und ein um eine Drehachse D hin- und herdrehbarer Kern K schematisch dargestellt sind. Die Versorgungsleitungsspirale VS befindet sich zwischen dem Kern K und dem Gehäuse G.

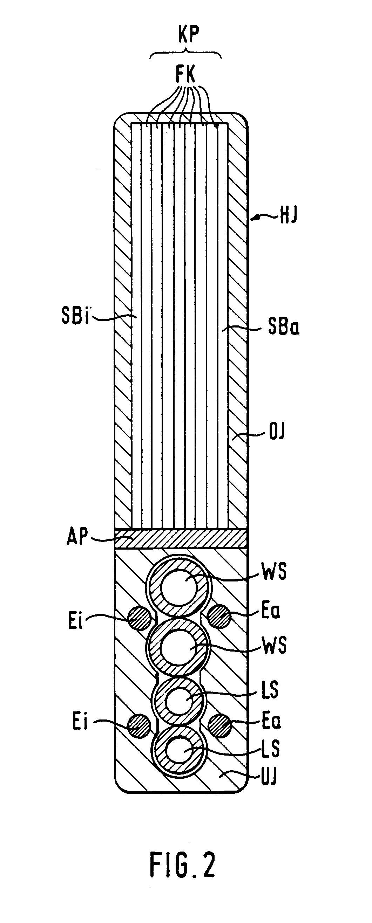

Wie in Fig. 2 dargestellt ist, umfaßt die Versorgungsleitungsspirale VS ein Kabelpaket KP mit mehreren aufrecht nebeneinander liegenden Flachkabeln FK, zwei Wasserschläuche WS und zwei Luftschläuche LS. Beidseits des Kabelpaketes KP ist je ein Schutzband angeordnet, nämlich ein inneres Schutzband SBi auf der zur Drehachse weisenden Innenseite und ein äußeres Schutzband SBa auf der von der Drehachse wegweisenden Außenseite des Kabelpakets KP. Die Schutzbänder SBa und SBi weisen die gleiche Höhe wie das Kabelpaket KP auf und bestehen je aus einem prallfesten, nachgiebigen Kunststoff- oder Gummiband.

Entlang der das Kabelpaket KP und die Wasser- und Luftschläuche WS bzw. LS aufweisenden Versorgungsleitungsspirale sind vier Expander geführt, nämlich zwei auf der Innenseite der Versorgungsleitungen übereinander geführte innere Expander Ei und zwei auf der Außenseite der Versorgungsleitungen übereinander geführte äußere Expander Ea. Jeder dieser Expander besteht aus einer elastischen Gummi- oder Kunststoffschnur runden Querschnitts.

Längs der Versorgungsleitungen der Versorgungsleitungsspirale VS sind mehrere Befestigungsstellen B1 bis B15 vorgesehen, an denen die Versorgungsleitungen und die Schutzbänder SBi, SBa zusammengehalten werden und die Expander Ei, Ea festgelegt werden. An jeder dieser Befestigungsstellen B1 bis B15 ist ein Haltejoch HJ angeordnet, das einen das Kabelpaket KP und die Schutzbänder SBi, SBa einfassendes Oberjochteil OJ und einen die Wasserschläuche WS und die Luftschläuche LS einfassenden Unterjochteil UJ aufweist. Dabei sind die einzelnen Flachkabel FK und die beiden Schutzbänder SBi, SBa relativ zueinander und zu dem Haltejoch HJ verschiebbar gehalten, um ihnen Verschiebungen zueinander aufgrund des unterschiedlichen Abstands von der Drehachse D zu ermöglichen. Wenn die Wasserschläuche WS und die Lufschläuche LS übereinander liegen, wie bei der in Fig. 2 gezeigten Ausführungsform, können sie ohne eine Beweglichkeit zueinander in dem Haltejoch HJ gehalten werden. Sie können aber ebenfalls relativ zueinander zu dem Haltejoch HJ verschiebbar gehalten werden.

Die Expander Ei, Ea sind in den Unterjochteilen UJ der einzelnen Haltejoche HJ unverschiebbar festgehalten, um definierte Vorspannungsbedingungen für die VS Versorgunsleitungsspirale festzulegen. Diese Vorspannbedingungen werden durch die Gesamtvorspannung von inneren Expandern Ei und äußeren Expandern Ea und durch die Positionen der einzelnen Befestigungsstellen B1 bis B15 entlang der Versorgungsleitungen so vorgegeben, daß die Versorgungsleitungsspirale VS im sich selbst überlassenen Ruhezustand eine vorbestimmte Ruhestellungsspiralkrümmung einnimmt. Dabei wird die von den inneren Expandern Ei auf die Versorgungsleitungen ausgeübte Vorspannkraft mindestens so groß gemacht wie die Summe aus der von den äußeren Expandern Ea auf die Versorgungsleitungen ausgeübten Vorspannkraft und der zur Überwindung des Biegewiderstandes der Versorgungsleitungen aufzuwendenden Biegekraft.

Während die äußeren Expander Ea an den Wasserschläuchen WS bzw. Luftschläuchen LS anliegen, erstrecken sich die inneren Expander Ei sehnenförmig von Haltejoch zu Haltejoch. Damit bilden die Sehnen der Innenexpander Ei einen zusätzlichen Prallschutz gegenüber dem Außenbereich der benachbarten inneren Spirallage, wenn die Versorgungsleitungsspirale VS stark eingedreht wird. Nach dem Aufprallen der einzelnen Spirallagen auf die Expandersehnen der je nach außen hin benachbarten Spirallage werden die Expandersehnen von den aufgeprallten Spirallagen aus ihrer Sehnenform in eine der aufgeprallten Spirallage entsprechende gekrümmte Form gebogen. Dies erzeugt eine stärkere Vorspannung der Versorgungsleitungsinnenseite und fördert zusätzlich die Bildung einer engen Spirale.

Eine Versorgungsleitungsspirale für Roboter ist relativ schwer. Daher läßt man die Versorgungsleitungsspirale VS nicht in der Luft hängen sondern auf einer Gleitfläche GF aufliegen. Außerdem bildet man die Unterseiten der einzelnen Haltejoche HJ als Gleitfüße aus. Dabei sollten die Gleitfläche GF und die Gleitfüße der Haltejoche HJ aus gut gleitendem Material sein, um die Reibungsverluste und die Materialabnutzung möglichst niedrig zu halten. Ein gut geeignetes Material ist beispielsweise Polytetrafluorethylen (PTFE).

Als Material für die Expander Ei, Ea und die Schutzbänder SBi, SBa eignet sich beispielsweise Polyurethan-Gummi vorzüglich. Eine Auflageplatte AP, die den Boden des Oberjochteils OJ eines jeden Haltejochs HJ bildet und als Tragfläche für die verschiebbaren Flachkabel FK dient, kann ebenfalls aus einem Polyurethan bestehen.

Das innnere Ende der Versorgungsleitungs‐spirale ist mit Hilfe einer Scharniervorrichtung S am hin‐ und herdrehbaren Kern K befestigt. Die Scharniervorrichtung S umfaßt ein erstes Schar‐nierteil 1 aus einem Kunststoff, das am Kern K fest angeordnet ist, und ein zweites Scharnierteil 2 aus Metall, das mittels eines Scharnierbolzens 3 ver‐schwenkbar am ersten Scharnierteil 1 angebracht ist. Am zweiten Scharnierteil 2 sind ein inneres Scharnierblech 4 und ein äußeres Scharnierblech 5 angeordnet, die dem Umfang des Kerns K ent‐sprechend gekrümmt und mittels eines Distanz‐blocks 6 im Abstand voneinander gehalten werden. Das innere Ende der Versorgungsleitungsspirale ist zwischen die freien Enden der Scharnierbleche 4 und 5 geführt und setzt sich in einen zwischen den beiden Scharnierblechen 4 und 5 senkrecht nach oben herausgeführten Versorgungsleitungsteil fort, dessen einzelne Versorgungsleitungen mit den entsprechenden Verbrauchern des Roboters ver‐bunden sind. Zwischen dem beweglichen Schar‐nierteil 2 und dem Distanzblock 6 sind zwischen die beiden Scharnierbleche 4 und 5 eine innere Führungsleiste 7 und eine äußere Führungsleiste 8 eingefügt, welche die Umlenkung der Versor‐gungsleitungen aus dem horizontalen Spiralverlauf in den vertikalen Verlauf unterstützen.

Die Expander Ei, Ea und die Schutzbänder SBi, SBa sind am Innenende der Versorgungslei‐tungsspirale VS ebenfalls an der Scharniervorrich‐tung S befestigt. Die Expander Ei, Ea sind an einer zwischen den Scharnierflächen 4 und 5 angeord‐neten Expanderhalterung 9 befestigt. Die Schutz‐bänder SBi, SBa sind zwischen die Scharnierble‐che 4, 5 geschoben oder vorzugsweise an diesen befestigt.

Das äußere Ende der Versorgungsleitungsspi‐rale ist durch eine Öffnung im Gehäuse G heraus‐geführt und setzt sich außerhalb des Gehäuses E bis zu feststehenden elektrischen Anschlußele‐menten für die Flachkabel FK bzw. Wasser‐ und Luftanschlüssen für die Wasserschläuche WS bzw. die Luftschläuche LS fort.

Die Spiralaußenenden der Schutzbänder SBi, SBa sind mittels Schrauben 10 bzw. 11 beidseits der Gehäuseöffnung am Gehäuse G befestigt, wobei sie zwischen der äußersten Befestigungs‐stelle B15 und den Schrauben 10, 11 trichterförmig divergieren. Die Spiralaußenenden der Expander Ei, Ea sind an einer äußeren Expanderhalterung 12 befestigt. Dabei verlaufen die äußeren Expander Ea bis zur äußeren Expanderhalterung 12 an der Au‐ßenseite der Wasser‐ und Luftschläuche WS, LS, während die inneren Expander Ei sehnenartig zwischen der äußersten Befestigungsstelle B15 und der äußeren Expanderhalterung 12 verlaufen.

Das Kabelpaket KP ist außerhalb des Gehäu‐ses zwischen einem Haltebolzen 13 und einer Halteplatte 14 festgeklemmt und bogenförmig um den Haltebolzen 3 herumgeführt. Ein mit dem Ka‐belpaket KP um den Haltebolzen 13 mit herumge‐führtes Federpaket 15 entlastet die Biegestelle des Kabelpakets KP im Bereich des Haltebolzens 13.

Zwischen das Kabelpaket KP und den Halte‐bolzen 13 einerseits und zwischen das Kabelpaket KP und die Halteplatte 14 andererseits ist je eine streifenförmige Schutzplatte 16 bzw. 17 gespannt, die beide aus einem Polyurethan‐Gummi beste‐hen können. Die Schutzplatte 16 ist in einem ge‐räumigen Bogen bis zu einer Schutzplattenhalte‐rung 18 geführt. Der zwischen der Gehäuseöffnung und dem Haltebolzen 13 befindliche Bereich des Kabelpakets KP hat somit genügend Freiraum für Bewegungen, die durch das Ein‐ und Ausdrehen der Versorgungsleitungsspirale VS verursacht werden.

Im folgenden werden einige Maße für ein spe‐zielles Ausführungsbeispiel gegeben.

Durchmesser des Kerns K: 355 mm Durch‐messer des Gehäuses G: 780 mm
Länge des inneren Expanders Ei: 3.480 mm
Länge des äußeren Expanders Ea: 3.640 mm
Länge des inneren Schutzbandes SBi ab Schar‐niervorrichtung S: 3.930 mm
Länge des äußeren Schutzbandes SBa ab Schar‐niervorrichtung S: 4.140 mm
Material der Expander und der Schutzbänder: Po‐lyurethan
Material der Gleitfläche GF: PTFE
Material der Haltejoche HJ: PTFE.

**Patentansprüche**

1. Versorgungsleitungsanordnung für eine um eine Drehachse (D) hin‐ und herrotierbare, in allen Drehstellungen versorgungsbedürftige Vorrichtung (K), insbesondere für einen Ro‐boter,
wobei die Versorgungsleitungsanordnung mindestens eine biegewiderstandsbehaftete Versorgungsleitung (FK,WS,LS) aufweist, die spiralförmig um die Drehachse (D) herum angeordnet und einen Endes mit einer ortsfe‐sten Versorgungseinrichtung und anderen En‐des mitdrehend mit der rotierbaren Vorrichtung (K) gekoppelt ist,
dadurch **gekennzeichnet,**
daß mindestens ein die Versorgungsleitungs‐spirale (VS) eindrehend vorspannender elasti‐scher Innenstrang (Ei) auf der zur Drehachse (D) weisenden Innenseite der Versorgungslei‐tung (FK,WS,LS) und mindestens ein die Ver‐

sorgungsleitungspirale (VS) ausdrehend vor‑spannender elastischer Außenstrang (Ea) auf der von der Drehachse (D) wegweisenden Außenseite der Versorgungsleitung vorgesehen sind, und daß die zusammenwirkenden Vor‑spannkräfte von Innenstrang (Ei) und Außen‑strang (Ea) derart bemessen sind, daß die Versorgungsleitungsspirale (VS) im sich selbst überlassenen Ruhezustand eine vorbestimmte Ruhestellungsspiralkrümmung einnimmt.

2. Versorgungsleitungsanordnung nach Anspruch 1, dadurch gekennzeichnet, daß die vom In‑nenstrang (Ei) auf die Versorgungsleitung (FK,WS,LS) ausgeübte Vorspannkraft minde‑stens so groß ist wie die Summe aus der vom Außenstrang (Ea) auf die Versorgungsleitung (FK,WS,LS) ausgeübten Vorspannkraft und der zur Überwindung des Biegewiderstandes der Versorgungsleitung (FK,WS,LS) auszuwen‑denden Biegekraft.

3. Versorgungsleitungsanordnung nach Anspruch 1 oder 2, dadurch gekennzeichnet, daß der Innenstrang (Ei) und der Außenstrang (Ea) in einen Innenstrangtunnel oder eine Innen‑strangnut bzw. in einen Außenstrangtunnel bzw. eine Außenstrangnut in einem Versor‑gungsleitungsmantel mit der erforderlichen Vorspannung eingelegt sind.

4. Versorgungsleitungsanordnung nach Anspruch 1 oder 2, dadurch gekennzeichnet, daß der Innenstrang (Ei) und der Außenstrang (Ea) je nur an in vorbestimmten Intervallen vorgese‑henen Befestigungsstellen (B1 bis B15) an der Versorgungsleitung (FK,WS,LS) befestigt sind und der Außenstrang (Ea) an der Außenseite der Versorgungsleitung (FK,WS,LS) anliegt.

5. Versorgungsleitungsanordnung nach Anspruch 4, dadurch gekennzeichnet, daß der Innen‑strang (Ei) und der Außenstrang (Ea) an den Befestigungsstellen (B1 bis B15) in einen Versorgungsleitungsmantel eingeformt, insbe‑sondere eingegossen oder eingespritzt sind.

6. Versorgungsleiltungsanordnung nach einem oder mehreren der Ansprüche 1 bis 5, dadurch gekennzeichnet, daß der zur Versorgungslei‑tungsspirale (VS) gehörende Bereich der Ver‑sorgungsleitung (FK,WS,LS) an seiner Unter‑seite mit einer Gleiteinrichtung versehen ist, die von einer ortsfesten Gleitunterlage (GF) getragen wird.

7. Versorgungsleitungsanordnung nach Anspruch 6, dadurch gekennzeichnet, daß die Gleitein‑richtung durch Gleitfüße an den Befesti‑gungsstellen (B1 bis B15) gemäß Anspruch 4 gebildet ist.

8. Versorgungsleitungsanordnung nach Anspruch 6 oder 7, dadurch gekennzeichnet, daß die Gleitunterlage (GF) durch Polytetrafluorethylen (PTFE) gebildet ist.

9. Versorgungsleitungsanordnung nach Anspruch 7 oder 8, dadurch gekennzeichnet, daß die Gleiteinrichtung durch PTFE gebildet ist.

10. Versorgungsleitungsanordnung nach einem oder mehreren der Ansprüche 1 bis 9, dadurch gekennzeichnet, daß die Versorgungslei‑tungsspirale (VS) mehrere zu mindestens ei‑nem Kabel (FK) zusammengefaßte elektrische Versorgungsleitungen aufweist.

11. Versorgungsleitungsanordnung nach Anspruch 10, dadurch gekennzeichnet, daß die Versor‑gungsleitungsspirale (VS) ein Kabelbündel (KB) mit mehreren mit ihren Flachseiten an‑einanderliegenden Flachbandkabeln (FK) auf‑weist, die relativ zueinander gleitfähig anein‑ander gehalten werden.

12. Versorgungsleitungsanordnung nach Anspruch 10 oder 11, dadurch gekennzeichnet, daß die Versorgungsleitungsspirale (VS) mindestens eine Fluidleitung (WS,LS) oder ein Fluidkabel für den Transport flüssiger und/oder gasför‑miger Stoffe aufweist.

13. Versorgungsleitungsanordnung nach Anspruch 12, dadurch gekennzeichnet, daß die Fluidlei‑tung (WS,LS) oder das Fluidkabel mit einem Flachbandkabel (FK) integriert ist.

14. Versorgungsleitungsanordnung nach einem der Ansprüche 11 bis 13, dadurch gekennzeichnet, daß der Außenstrang (Ea) und der Innenstrang (Ei) an den Befestigungsstellen (B1 bis B15) in nur eines oder in das äußerste bzw. das in‑nerste der Flachbandkabel (FK) oder der Fluidkabel (WS,LS) eingeformt sind.

15. Versorgungsleitungsanordnung nach einem oder mehreren der Ansprüche 1 bis 14, da‑durch gekennzeichnet, daß jeder elastische Strang (Ei, Ea) durch eine Gummischnur‑Expander gebildet ist.

16. Versorgungsleitungsanordnung nach einem oder mehreren der Ansprüche 1 bis 14, da‑durch gekennzeichnet, daß jeder elastische Strang (Ei, Ea) durch eine Elastomer‑Voll‑

schnur gebildet ist.

**17.** Versorgungsleitungsanordnung nach Anspruch 16, dadurch gekennzeichnet, daß jeder elastische Strang (Ei, Ea) durch eine Vollschnur aus Polyurethan gebildet ist.

**18.** Versorgungsleitungsanordnung nach einem oder mehreren der Ansprüche 1 bis 14, dadurch gekennzeichnet, daß die elastischen Stränge durch Federelemente gebildet sind, die an den Befestigungsstellen (B1 bis B15) an der Versorgungsleitungsspirale (VS) befestigt sind.

**19.** Versorgungsleitungsanordnung nach Anspruch 18, dadurch gekennzeichnet, daß die Federelemente je durch mindestens eine Schraubenfeder gebildet sind.

**20.** Versorgungsleitungsanordnung nach Anspruch 18 oder 19, dadurch gekennzeichnet, daß jeder elastische Strang durch eine Vielzahl Federelemente gebildet ist, die je zwischen zwei benachbarte Befestigungsstellen (B1 bis B15) sowie zwischen die innerste Befestigungsstelle (B1) und die rotierbare Vorrichtung (K) einerseits und zwischen die äußerste Befestigungsstelle (B15) und eine ortsfeste Stranghalterung andererseits gespannt sind.

**21.** Versorgungsleitungsanordnung nach einem oder mehreren der Ansprüche 4 bis 20, dadurch gekennzeichnet, daß die mindestens eine Versorgungsleitung (FK,WS,LS) an jeder Befestigungsstelle (B1 bis B15) von einem Haltejoch (HJ) eingefaßt ist und daß die elastischen Stränge (Ei,Ea) an den Haltejochen (HJ) befestigt sind.

**22.** Versorgungsleitungsanordnung nach Anspruch 21, dadurch gekennzeichnet, daß jedes Haltejoch (HJ) einen Unterjochteil (UJ), in dem mehrere übereinander angeordnete Fluidleitungen (WS,LS) und die elastischen Stränge (Ei,Ea) festgehalten sind, und einen bügelartigen Oberjochteil (OJ), der die mindestens eine elektrische Versorgungsleitung (FK) umgibt, aufweist.

**23.** Versorgungsleitungsanordnung nach Anspruch 22, dadurch gekennzeichnet, daß in dem Oberjochteil (OJ) mehrere elektrische Versorgungsleitungen (FK) relativ zum Haltjoch (HJ) verschiebbar untergebracht sind.

**24.** Versorgungsleitungsanordnung nach einem oder mehreren der Ansprüche 1 bis 23, dadurch gekennzeichnet, daß wenigstens an der Innen- oder der Außenseite der mindestens einen Versorgungsleitung (FK,WS,LS) ein Schutzband (SBi,SBa) aus prallfestem Material angeordnet ist, dessen Bandhöhe mindestens so groß wie die Höhe der elektrischen Versorgungsleitung bzw. Versorgungsleitungen (FK) in Drehachsenrichtung ist.

**25.** Versorgungsleitungsanordnung nach Anspruch 24, dadurch gekennzeichnet, daß das Schutzband (SBi,SBa) aus elastischem Material besteht.

**26.** Versorgungsleitungsanordnung nach Anspruch 24 oder 25, dadurch gekennzeichnet, daß das Schutzband (SBi, SBa) in den Oberjochteilen (OJ) seitlich der elektrischen Versorgungsleitung bzw. Versorgungsleitungen (FK) untergebracht ist.

**27.** Versorgungsleitungsanordnung nach Anspruch 26, dadurch gekennzeichnet, daß das Schutzband (SBi,SBa) in den Haltejochen (HJ) verschiebbar ist.

**28.** Versorgungsleitungsanordnung nach einem oder mehreren der Ansprüche 24 bis 27, dadurch gekennzeichnet, daß beidseits der mindestens einen Versorgungsleitung (FK,WS,LS) je ein Schutzband (SBi,SBa) vorgesehen ist, das an den Befestigungsstellen (B1 bis B15) an der Versorgungsleitung (FK,WS,LS) bzw. dem Haltejoch (HJ) befestigt ist und die Funktion des elastischen Innenstanges (Ei) bzw. Außenstranges (Ea) übernimmt oder an dieser Funktion beteiligt ist.

**29.** Versorgungsleitungsanordnung nach einem oder mehreren der Ansprüche 21 bis 28, dadurch gekennzeichnet, daß die Gleiteinrichtungen an den Unterseiten der Haltejoche (HJ) gebildet sind.

**30.** Versorgungsleitungsanordnung nach einem oder mehreren der Ansprüche 1 bis 29, dadurch gekennzeichnet, daß die Versorgungsleitungen oder Kabel (FK) mit einem Umhüllungsmantel aus PTFE oder gerecktem PTFE versehen sind.

**31.** Versorgungsleitungsanordnung nach einem oder mehreren der Ansprüche 1 bis 30, dadurch gekennzeichnet, daß zwischen den Versorgungsleitungen oder Kabeln (FK) Gleitbänder aus PTFE oder gerecktem PTFE angeordnet sind.

32. Versorgungsleitungsanordnung nach einem oder mehreren der Ansprüche 1 bis 31, dadurch gekennzeichnet, daß am Umfang der hin- und herdrehenden Vorrichtung (K) eine Scharniervorrichtung (S) angeordnet ist, mittels welcher die an die hin- und herdrehende Vorrichtung (K) herangeführte mindestens eine Versorgungsleitung (FK, WS, LS) relativ zum Umfang der hin- und herdrehenden Vorrichtung (K) schwenkbar ist.

33. Versorgungsleitungsanordnung mit mindestens einem Schweißkabel, insbesondere nach einem oder mehreren der Ansprüche 1 bis 32, dadurch gekennzeichnet, daß der für den benötigten Schweißstrom erforderliche Leiterquerschnitt das Schweißkabels auf mehrere parallele Leiter aufgeteilt ist, die sich berührend nebeneinander liegen und gemeinsam von einer Isolation und einer auf die Isolation aufgebrachten flexiblen elektrischen Abschirmung umgeben sind.

34. Versorgungsleitungsanordnung nach Anspruch 33, dadurch gekennzeichnet, daß die mehreren parallelen Leiter in mehrere Leitergruppen aufgeteilt sind, daß die Leiter jeder Leitergruppe sich berührend nebeneinander liegen und gemeinsam von einer Isolation und einer darüber befindlichen flexiblen elektrischen Abschirmung umgeben sind, und daß diese Leitergruppen in einem gemeinsamen Kabel, insbesondere Bandkabel, angeordnet sind.

35. Versorgungsleitungsanordnung nach Anspruch 33 oder 34, dadurch gekennzeichnet, daß die Schweißkabelleiter zusammen mit mindestens einem Signalleiter in einem gemeinsamen Kabel, insbesondere Bandkabel, angeordnet sind.

**Claims**

1. A supply line assembly for a device (K), in particular a robot, which is rotatable in reciprocating manner about an axis of rotation (D) and requires supply in all rotational positions, said supply line assembly comprising at lest one supply line (FK, WS, LS) which displays bending resistance, is disposed spirally around the axis of rotation (D) and has one end coupled to a stationary supply means and the other end coupled to the rotatable device (K) in co-rotating manner,
characterized in that at least one resilient inner strand (Ei) biasing the supply line spiral (VS) in winding direction is provided on the inside of the supply line (FK, WS, LS) facing the axis of rotation (D), and at least one ressilient outer strand (Ea) biasing the supply line spiral (VS) in unwinding direction is provided on the outside of the supply line facing away from the axis of rotation (D), and in that the cooperating biasing forces of inner strand (Ei) and outer strand (Ea) are dimensioned such that the supply line spiral (VS), in its left-alone quiescent condition, assumes a predetermined quiescent position spiral curvature.

2. A supply line assembly according to claim 1, characterized in that the biasing force exerted by the inner strand (Ei) on the supply line (FK, WS, LS) is at least as large as the sum of the biasing force experted by the outer strand (Ea) on the supply line (FK, WS, LS) and the bending force to be applied for overcoming the bending resistance of the supply line (FK, WS, LS).

3. A supply line assembly according to claim 1 or 2,
characterized in that the inner strand (Ei) and the outer strand (Ea) are placed in an inner strand tunnel or an inner strand groove and in an outer strand tunnel or an outer strand groove, respectively, in a supply line jacket with the necessary bias.

4. A supply line assembly according to claim 1 or 2,
characterized in that the inner strand (Ei) and the outer strand (Ea) each are mounted to the supply line (FK, WS, LS) only at mounting locations (B1 to B15) provided in predetermined intervals, and in that the outer strand (Ea) abuts the outside of the supply line (FK, WS, LS).

5. A supply line assembly according to claim 4, characterized in that the inner strand (Ei) and the outer strand (Ea) are moulded at the mounting locations (B1 to B15) into a supply line jacket, in particular by injection moulding or casting.

6. A supply line assembly according to one or several ones of claims 1 to 5,
characterized in that the portion of the supply line (FK, WS, LS) belonging to the supply line spiral (VS) is provided on its bottom side with a sliding means which is supported by a stationary sliding support (GF).

7. A supply line assembly according to claim 6, characterized in that the sliding means is constituted by sliding feet at the mounting locations (B1 to B15) according to claim 4.

8.  A supply line assembly according to claim 6 or 7,
    characterized in that the sliding support (GF) is formed of polytetrafluoroethylene (PTFE).

9.  A supply line assembly according to claim 7 or 8,
    characterized in that the sliding means is formed of PTFE.

10. A supply line assembly according to one or several ones of claims 1 to 9,
    characterized in that the supply line spiral (VS) comprises a plurality of electrical supply lines which are combined to form at least one cable (FK).

11. A supply line assembly according to claim 10,
    characterized in that the supply line spiral (VS) comprises a cable bundle (KB) including several flat ribbon cables (FK) abutting each other with their flat sides and held in abutting manner so as to be slidable relative to each other.

12. A supply line assembly according to claim 10 or 11,
    characterized in that the supply line spiral (VS) comprises at least one fluid line (WS, LS) or a fluid cable for transporting liquid and/or gaseous substances.

13. A supply line assembly according to claim 12,
    characterized in that the fluid line (WS, LS) or the fluid cable is formed in integrated manner with a flat ribbon cable (FK).

14. A supply line assembly according to any one of claims 11 to 13,
    characterized in that the outer strand (Ea) and the inner strand (Ei) are moulded at the mounting locations (B1 to B15) in only one or in the outermost or innermost one, respectively, of the flat ribbon cables (FK) or the fluid cables (WS, LS).

15. A supply line assembly according to one or several ones of claims 1 to 14, characterized in that each resilient strand (Ei, Ea) is constituted by a rubber cord expander.

16. A supply line assembly according to one or several ones of claims 1 to 14, characterized in that each resilient strand (Ei, Ea) is constituted by an elastomeric solid cord.

17. A supply line assembly according to claim 16, characterized in that each resilient strand (Ei, Ea) is constituted by a solid cord of polyurethane.

18. A supply line assembly according to one or several ones of claims 1 to 14, characterized in that the resilient strands are constituted by spring elements attached at the mounting locations (B1 to B15) on the supply line spiral (VS).

19. A supply line assembly according to claim 18, characterized in that the spring elements are each constituted by at least one coil spring.

20. A supply line assembly according to claim 18 or 19,
    characterized in that each resilient strand is constituted by a multiplicity of spring elements each tensioned between two adjacent mounting locations (B1 to B15) as well as between the innermost mounting locations (B1) and the rotatable device (K) on the one hand and between the outermost mounting location (B15) and a stationary strand support on the other hand.

21. A supply line assembly according to one or several ones of claims 4 to 20, characterized in that the at least one supply line (FK, WS, LS) is enclosed at each mounting location (B1 to B15) by a holding yoke (HJ) and in that the resilient strands (Ei, Ea) are secured to the holding yokes (HJ).

22. A supply line assembly according to claim 21, characterized in that each holding yoke (HJ) comprises a lower yoke part (UJ), in which a plurality of fluid lines (WS, LS) arranged above each other and the resilient strands (Ei, Ea) are retained, and a bow-like upper yoke part (OJ) enclosing the at least one electrical supply line (FK).

23. A supply line assembly according to claim 22, characterized in that a plurality of electrical supply lines (FK) is disposed in the upper yoke part (OJ) so as to be slidable relative to the holding yoke (HJ).

24. A supply line assembly according to one or several ones of claims 1 to 23, characterized in that at least on the inside or on the outside of the at least one supply line (FK, WS, LS) there is disposed a protective band (SBi, SBa) of impact-proof material, whose band height is as least as large as the height of the electrical supply line or lines (FK) in the direction of the axis of rotation.

25. A supply line assembly according to claim 24, characterized in that the protective band (SBi, SBa) consists of resilient material.

26. A supply line assembly according to claim 24 or 25, characterized in that the protective band (SBi, SBa) is accommodated in the upper yoke parts (OJ) laterally of the electrical supply line or lines (FK).

27. A supply line assembly according to claim 26, characterized in that the protective band (SBi, SBa) is slidable in the holding yokes (HJ).

28. A supply line assembly according to one or several ones of claims 24 to 27, characterized in that on both sides of the at least one supply line (FK, WS, LS) there is provied one protec‑ tive band (SBi, SBa) each, which is secured at the mounting locations (B1 to B15) to the supply line (FK, WS, LS) and the holding yoke (HJ), respectively, and takes over, or partici‑ pates in, the function of the resilient inner strand (Ei) and the resilient outer strand (Ea), respectively.

29. A supply line assembly according to one or several ones of claims 21 to 28, characterized in that the sliding means are formed at the bottom sides of the holding yokes (HJ).

30. A supply line assembly according to one or several ones of claims 1 to 29, characterized in that the supply lines or cables (FK) are pro‑ vided with a surrounding jacket of PTFE or expanded PTFE.

31. A supply line assembly according to one or several ones of claims 1 to 30, characterized in that sliding bands of PTFE or expanded PTFE are disposed between the supply lines or ca‑ bles (FK).

32. A supply line assembly according to one or several ones of claims 1 to 31, characterized in that a hinge means (S) is disposed on the circumference of the reciprocatingly rotatable device (K), by means of which the at least one supply line (FK, WS, LS) extending to the reciprocatingly rotatable device (K) is pivotable relative to the circumference of the re‑ ciprocatingly rotatable device (K).

33. A supply line assembly comprising at least one welding cable, in particular according to one or several ones of claims 1 to 32, characterized in that the conductor cross‑ section of the welding cable necessary for the required welding current is distributed to sev‑ eral parallel conductors juxtaposed in contact‑ ing manner and being commonly surrounded by an insulation and a flexible electrical shield applied onto the insulation.

34. A supply line assembly according to claim 33, characterized in that the several parallel con‑ ductors are distributed to several conductor groups, that the conductors of each conductor group are juxtaposed in contacting manner and are commonly surrounded by an insulation and a flexible electrical shield located on top thereof, and in that these conductor groups are arranged in a common cable, in particular a ribbon cable.

35. A supply line assembly according to claim 33 or 34, characterized in that the welding cable con‑ ductors are arranged together with at least one signal conductor in a common cable, in par‑ ticular a ribbon cable.

**Revendications**

1. Système de canalisation d'alimentation pour un dispositif (K) pouvant être tourné en va‑et‑ vient autour d'un axe de rotation (D) et de‑ mandant une alimentation dans toutes les po‑ sitions angulaires, en particulier pour un robot, système qui comprend au moins une canali‑ sation d'alimentation (FK, WS, LS) offrant une résistance à la flexion, canalisation qui est disposée en spirale autour de l'axe de rotation (D) et dont une extrémité est accouplée à un dispositif d'alimentation fixe, tandis que l'autre extrémité est accouplée au dispositif rotatif (K) et tourne avec lui, caractérisé en ce que au moins un élément filiforme ou boudin élas‑ tique (Ei), conférant une précontrainte de ro‑ tation dans le sens du resserrement ou de l'enroulement plus serré à la spirale de cana‑ lisation d'alimentation (VS), est prévu sur le côté intérieur, dirigé vers l'axe de rotation (D), de la canalisation d'alimentation (FK, WS, LS) et au moins un élément filiforme ou boudin élastique extérieur (Ea), conférant une pré‑ contrainte de rotation dans le sens du desser‑ rement ou de l'enroulement moins serré à la spirale de canalisation d'alimentation (VS), est prévu sur le côté extérieur, éloigné de l'axe de rotation (D), de la canalisation d'alimentation, et que les forces de précontrainte coopérantes du boudin intérieur (Ei) et du boudin extérieur (Ea) sont ajustées de manière que la spirale de canalisation d'alimentation (VS) prenne une courbure en spirale de repos, prédéterminée, à l'état de repos où la spirale est laissée libre.

2.  Système de canalisation d'alimentation selon la revendication 1, caractérisé en ce que la force de précontrainte exercée par le boudin intérieur (Ei) sur la canalisation d'alimentation (FK, WS, LS) correspond au moins à la somme de la force de précontrainte exercée par le boudin extérieur (Ea) sur la canalisation d'alimentation (FK, WS, LS) et de la force de fléchissement à déployer pour vaincre la résistance à la flexion de la canalisation d'alimentation (FK, WS, LS).

3.  Système de canalisation d'alimentation selon la revendication 1 ou 2, caractérisé en ce que boudin intérieur (Ei) et le boudin extérieur (Ea) sont disposés respectivement, avec la précontrainre requise, dans un tunnel ou une rainure de boudin intérieur et un tunnel ou rainure de boudin extérieur à l'intérieur d'une enveloppe de canalisation d'alimentation.

4.  Système de canalisation d'alimentation selon la revendication 1 ou 2, caractérisé en ce que le boudin intérieur (EI) et le boudin extérieur (Ea) sont chacun fixés seulement à la canalisation d'alimentation (FK, WS LS) à des points de fixation (B1 à B15) prévus à intervalles prédéterminés et le boudin extérieur (Ea) est appliqué contre le côté extérieur de la canalisation d'alimentation (FK, WS, LS).

5.  Système de canalisation d'alimentation selon la revendication 4, caractérisé en ce que le boudin intérieur (Ei) et le boudin extérieur (Ea) sont incorporés par formage dans une enveloppe de canalisation d'alimentation aux points de fixation (B1 à B15), en particulier par coulée ou moulage par injection.

6.  Système de canalisation d'alimentation selon une ou plusieurs des revendications 1 à 5, caractérisé en ce que la partie de la canalisation d'alimentation (FK, WS, LS) appartenant à la spirale de canalisation d'alimentation (VS) est pourvue sur son côté inférieur d'un dispositif de glissement porté par un support de glissement fixe (GF).

7.  Système de canalisation d'alimentation selon la revendication 6, caractérisé en ce que le dispositif de glissement est formé par des pieds de glissement prévus aux points de fixation (B1 à B15) selon la revendication 4.

8.  Système de canalisation d'alimentation selon la revendication 6 ou 7, caractérisé en ce que le support de glissement (GF) est réalisé en polytétrafluoroéthylène (PTFE).

9.  Système de canalisation d'alimentation selon la revendication 7 ou 8, caractérisé en ce que le dispositif de glissement est réalisé en PTFE.

10. Système de canalisation d'alimentation selon une ou plusieurs des revendications 1 à 9, caractérisé en ce que la spirale de canalisation d'alimentation (VS) comporte plusieurs canalisations d'alimentation électrique rassemblées en au moins un câble (FK).

11. Système de canalisation d'alimentation selon la revendication 10, caractérisé en ce que la spirale de canalisation d'alimentation (VS) comporte un faisceau de câbles (KB) contenant plusieurs câbles (FK) en forme de bandes plates appliquées les uns contre les autres par leurs côtés plats et qui sont maintenus ensemble de façon à pouvoir glisser les uns par rapport aux autres.

12. Système de canalisation d'alimentation selon la revendication 10 ou 11, caractérisé en ce que la spirale de canalisation d'alimentation (VS) comporte au moins une conduite de fluide (WS, LS) ou un câble à fluide pour le transport de substances liquides et/ou gazeuses.

13. Système de canalisation d'alimentation selon la revendication 12, caractérisé en ce que la conduite de fluide (WS, LS) ou le câble à fluide est intégré avec un câble en forme de bande plate (FK).

14. Système de canalisation d'alimentation selon une des revendications 11 à 13, caractérisé en ce que, aux points de fixation (B1 à B15), le boudin extérieur (Ea) et le boudin intérieur (Ei) sont seulement incorporés par formage dans l'un des câbles en forme de bande plate (FK) ou des câbles à fluide (WS, LS), ou seulement dans celui de ces câbles situé le plus à l'extérieur ou le plus à l'intérieur.

15. Système de canalisation d'alimentation selon une ou plusieurs des revendications 1 à 14, caractérisé en ce que chaque boudin élastique (Ei, Ea) est formé par un cordon de caoutchouc dilatateur.

16. Système de canalisation d'alimentation selon une ou plusieurs des revendications 1 à 14, caractérisé en ce que chaque boudin élastique (Ei, Ea) est formé par un cordon massif en élastomère.

17. Système de canalisation d'alimentation selon la revendication 16, caractérisé en ce que chaque boudin élastique (Ei, Ea) est formé par un cordon massif en poluréthanne.

18. Système de canalisation d'alimentation selon une ou plusieurs des revendications 1 à 14, caractérisé en ce que les boudins élastiques sont formés par des éléments à ressorts fixés à la spirale de canalisation d'alimentation (VS) aux points de fixation (B1 à B15).

19. Système de canalisation d'alimentation selon la revendication 18, caractérisé en ce que les éléments à ressorts sont formés chacun par au moins un ressort hélicoïdal.

20. Système de canalisation d'alimentation selon la revendication 18 ou 19, caractérisé en ce que chaque boudin élastique est formé par un grand nombre d'éléments à ressort qui sont tendus chacun entre deux points de fixation (B1 à B15) voisins, ainsi qu'entre le point de fixation (B1) situé le plus à l'intérieur et le dispositif rotatif (K) d'une part et entre le point de fixation (B15) situé le plus à l'extérieur et une fixation de boudins stationnaire d'autre part.

21. Système de canalisation d'alimentation selon une ou plusieurs des revendications 4 à 20, caractérisé en ce que la ou les canalisations d'alimentation (FK, WS,LS) est ou sont prise(s) à chaque point de fixation, (B1 à B15) dans une entretoise de maintien (HJ) et que les boudins élastiques (Ei, Ea) sont fixés aux en − tretoises de maintien (HJ).

22. Système de canalisation d'alimentation selon la revendication 21, caractérisé en ce que chaque entretoise de maintien (HJ) comporte une partie inférieure (UJ) dans laquelle sont maintenues plusieurs conduites de fluide (WS, LS) superposées et les boudins élastiques (Ei, Ea) et une partie supérieure (OJ) en forme d'étrier qui entoure au moins une canalisation d'alimentation électrique (FK).

23. Système de canalisation d'alimentation selon la revendication 22, caractérisé en ce que plusieurs canalisations d'alimentation électri − que (FK) sont disposées glissantes par rapport à l'entretoise de maintien (HJ) dans la partie supérieure (OJ) de cette entretoise.

24. Système de canalisation d'alimentation selon une ou plusieurs des revendications 1 à 23, caractérisé en ce qu'une bande protectrice (SBi, SBa) en matériau résistant aux impacts est disposée sur au moins le côté intérieur ou le côté extérieur de la ou des canalisations d'alimentation (FK, WS, LS), bande dont la hauteur est au moins égale à la hauteur de la ou des canalisations d'alimentation électrique (FK) dans le sens de l'axe de rotation.

25. Système de canalisation d'alimentation selon la revendication 24, caractérisé en ce que bande protectrice (BIi, SBa) est en matériau élastique.

26. Système de canalisation d'alimentation selon la revendication 24 ou 25, caractérisé en ce que la bande protectrice (SBi, SBa) est placée dans les parties supérieures (OJ) des entre − toises, à côté de la ou des canalisations d'ali − mentation électrique (FK).

27. Système de canalisation d'alimentation selon la revendication 26, caractérisé en ce que la bande protectrice (SBi, SBa) peut glisser dans les entretoises de maintien (HJ).

28. Système de canalisation d'alimentation selon une ou plusieurs des revendications 24 à 27, caractérisé en ce qu'une bande protectrice (SBi, SBa) est prévue des deux côtés de la ou des canalisations d'alimentation (FK, WS, LS), bande qui est attachée à la canalisation d'alimentation (FK, WS, LS) ou à l'entretoise de maintien (HJ) aux points de fixation (B1 à B15) et qui assure la fonction du boudin élas − tique intérieur (Ei) ou extérieur (Ea) ou contri − bue à cette fonction.

29. Système de canalisation d'alimentation selon une ou plusieurs des revendications 21 à 28, caractérisé en ce que les dispositifs de glis − sement sont formés sur les côtés inférieurs des entretoises de maintien (HJ).

30. Système de canalisation d'alimentation selon une ou plusieurs des revendications 1 à 29, caractérisé en ce que les canalisations d'ali − mentation ou câbles (FK) sont pourvus d'une enveloppe d'enrobage en PTFE ou en PTFE étiré.

31. Système de canalisation d'alimentation selon une ou plusieurs des revendications 1 à 30, caractérisé en ce que des bandes de glissement en PTFE ou en PTFE étiré sont placées entre les canalisations d'alimentation ou câbles (FK).

32. Système de canalisation d'alimentation selon une ou plusieurs des revendications 1 à 31, caractérisé en ce qu'un dispositif de charnière (S) est placé à la périphérie du dispositif (K) à rotation alternative, dispositif de charnière au moyen duquel la canalisation ou les canalisations d'alimentation (FK, WS, LS) amenée(s) à ce dispositif (K) à rotation alternative, peut pivoter ou peuvent pivoter par rapport à la périphérie de ce dispositif à rotation alternative (K).

33. Système de canalisation d'alimentation comportant au moins un câble de soudage, en particulier selon une ou plusieurs des revendications 1 à 32, caractérisé en ce que la section de conducteur du câble de soudage requise pour le courant de soudage nécessaire, est répartie sur plusieurs conducteurs parallèles qui sont juxtaposés en contact mutuel et sont entourés collectivement d'une isolation et d'un blindage électrique flexible disposé par-dessus l'isolation.

34. Système de canalisation d'alimentation selon la revendication 33, caractérisé en ce que les conducteurs parallèles sont répartis en plusieurs groupes de conducteurs, que les conducteurs de chaque groupe sont juxtaposés en contact mutuel et sont entourés collectivement d'une isolation et d'un blindage électrique flexible entourant l'isolation, et que ces groupes de conducteurs sont disposés dans un câble commun, en particulier un câble en forme de bande.

35. Système de canalisation d'alimentation selon la revendication 33 ou 34, caractérisé en ce que les conducteurs du câble de soudage sont disposés ensemble avec au moins un conducteur à signaux dans un câble commun, en particulier un câble en forme de bande.

FIG.1

EP 0 289 703 B1

FIG.2